# EUROPÄISCHE PATENTSCHRIFT

(11) **EP 4 012 381 B1**
(45) Veröffentlichungstag und Bekanntmachung des Hinweises auf die Patenterteilung: **26.11.2025**
(21) Anmeldenummer: 20212701.5
(22) Anmeldetag: 09.12.2020
(51) Int. Cl.: G01N 15/1404, G01N 15/1433, G01N 15/00, G01N 15/10, G01N 15/14

(54) **VORRICHTUNG UND VERFAHREN ZUM ERFASSEN VON PARTIKELN IN FLÜSSIGKEITEN & GASEN**
DEVICE AND METHOD FOR DETECTING PARTICLES IN LIQUIDS AND GASES
DISPOSITIF ET PROCÉDÉ DE DÉTECTION DES PARTICULES DANS DES LIQUIDES ET DES GAZ

(43) Veröffentlichungstag der Anmeldung: 15.06.2022
(73) Patentinhaber: Wilde, Axel, 45149 Essen (DE)
(72) Erfinder: Wilde, Axel, 45149 Essen (DE)
(74) Vertreter: Zenz Patentanwälte Partnerschaft mbB

(56) Entgegenhaltungen:
- EP-A1- 3 719 476
- US-A1- 2004 112 748
- US-A1- 2009 022 388
- US-A1- 2010 172 555

## Beschreibung

Die Erfindung betrifft eine Vorrichtung und ein Verfahren zur Erfassung von Partikeln in Fluid-Gemischen.

Der Begriff Fluid-Gemische bezeichnet dabei alle Arten von Flüssigkeiten und Gasen, die wenigstens eine Art Trägerfluid und darin mitgeführte Partikel aufweisen. Trägerfluid und Partikel unterscheiden sich in ihren optischen Eigenschaften, es kann sich jedoch sowohl beim Trägerfluid als auch bei den Partikeln grundsätzlich um trennbare Fluide handeln, die Partikel können jedoch auch organische oder anorganische Feststoffe sein, wobei unterschiedliche Arten von Partikeln enthalten sein können.

Im Rahmen dieser Anmeldung sind entsprechend unter dem Begriff Fluid alle Gase und Flüssigkeiten zusammengefasst, soweit diese förderfähig sind und optisch wenigstens in Abschnitten des sichtbaren Spektrums oder des Infrarotspektrums oder UV-Spektrums transparent sind. Der Begriff Partikel fasst alle in solchen Fluiden mitführbaren, räumlich begrenzten Strukturen zusammen, soweit diese optisch von dem Trägerfluid unterscheidbar sind und im Trägerfluid räumlich begrenzt bleiben. Dies umfasst entsprechend z.B. anorganische Partikel, organische Partikel und anorganische und organische Agglomerate, Gasblasen oder auch Fluid-Tropfen von anderer Art als das Trägerfluid etc.

Das Fluid-Gemisch (oder eine Probe davon) wird einem Messzonen-Erfassungsabschnitt zugeführt. Eine optische Erfassungseinrichtung ist mit einer Beleuchtungseinrichtung und einer digitalen Kamera ausgestattet, wobei die Kamera ein Pixel-Erfassungsarray (beispielsweise ein mehrdimensionales Pixelarray oder einen Zeilensensor) aufweist. Die Beleuchtungseinrichtung beleuchtet den Messzonen-Erfassungsabschnitt und die digitale Kamera nimmt das Fluid-Gemisch im Messzonen-Erfassungsabschnitt auf, wobei eine quasi-kontinuierliche oder diskrete (z.B. periodische) Bildfolge erzeugt wird. Der Kamera nachgeordnet angekoppelt ist eine Auswerteeinrichtung, welche die Bildsignale der Kamera empfängt und aus den Bildsignalen entnommene Einzelbilder auswertet, um diese einer programmgestützten Bildverarbeitung zuzuführen. Bildbereiche, in welchen Partikel abgebildet sind, werden dabei von zweiten Bildbereichen, in welchen partikelfreies Fluid abgebildet ist, durch die Bildverarbeitung anhand optischer Kriterien abgegrenzt. Die Auswerteeinrichtung bestimmt anhand der abgegrenzten Bereiche eine Partikelzahl der in jedem Bild optisch erfassten Partikel. Die weitere Auswertung der Bilddaten kann anschließend eine quantitative und/oder qualitative Analyse sein. Beispielsweise können Größen und morphologische Parameter von Partikeln unterschieden werden, außerdem Arten von Partikeln, wie beispielsweise Gasblasen, Flüssigkeitstropfen, Proteinaggregate und sonstige Stoffe.

Vorrichtung der genannten Art sind in der Technik als sogenannte Flow-Imaging-Systeme bekannt. Beispielsweise beschreibt das Dokument US 2014/0009621 A1 ein Analysesystem zur Bestimmung von Partikeln in Fluiden. Die in solchen Systemen eigesetzten funktionalen Komponenten sind am Markt verfügbar und hinsichtlich ihres grundsätzlichen Aufbaus bekannt. Eine Komponente zur Zuführung und Verdünnung von Fluid-Gemischen zu Flow-Imaging-Systemen ist beispielsweise aus dem Dokument WO 99/44033 bekannt. Außerdem gibt es auch verwandte Systeme, bei denen Partikelströme an sich, also Partikel ohne zugehörigen Trägerfluid in prinzipiell ähnlicher Weise wie in den vorgenannten Systemen einer Zählung und einer Analyse zugeführt werden. Solche Systeme sind beispielsweise in der EP 3 207 356 B1 oder auch der EP 1 972 921 A1 offenbart.

Die bekannten Flow-Imaging Systeme haben gemeinsam, dass die kontinuierlich oder in zeitlichen Abständen gemachten optischen Aufnahmen einer Kamera einer nachgeordneten Bildauswertung zugeführt werden. Als Kameras kommen regelmäßig Digitalkameras mit zweidimensionalem Bildsensor zum Einsatz, wobei der Bildsensor ein CCD-Bildsensor oder auch CMOS-Bildsensor sein kann. Derartige Kameras sind am Markt verfügbar und werden mit einer geeigneten Abbildungsoptik und Beleuchtungseinrichtung sowie Steuer- und Auswertesoftware kombiniert. Die Beleuchtungseinrichtung kann dabei eine monochromatische oder polychromatische Beleuchtungseinrichtung sein, wobei insbesondere auch Laserlichtquellen und LEDs zum Einsatz kommen können. Weiterhin können in Abhängigkeit von der Anordnung des Messzonen-Erfassungsabschnitts, der Beleuchtungseinrichtung und der Kamera zueinander unterschiedliche Abbildungsszenarien, insbesondere Durchlichtszenarien und Auflichtszenarien oder auch Mischformen davon realisiert werden.

Die erfassten Bilddaten werden einer automatisierten Bildauswertung zugeführt, welche eine Identifizierung und Zählung von Partikeln erlaubt, die auf einer Aufnahme erscheinen. Bei der Bildauswertung werden anhand optischer Kriterien in den aufgenommenen Bildern solche Bereiche identifiziert, welche von Partikel eingenommen werden und von solchen Bereichen abgegrenzt, in denen partikelfreies Trägerfluid abgebildet ist. Ein entsprechendes Bildauswertungsverfahren beschreibt z.B. die EP 3 037 804 A1. Anhand der optischen Unterschiede der Partikel einerseits und des Trägerfluids / Trägermediums andererseits können durch geeignete Beleuchtung und automatisierte Bereichserkennungen und Kantenerkennungen die Grenzen der Partikel identifiziert werden. Auf diese Weise ist es möglich, die erfassten und optisch vereinzelten Partikel einer Zählung zuzuführen. In einfachen Fällen kann es bereits ausreichen, Helligkeitsunterschiede zur Bereichsabgrenzung zu wählen, es ist jedoch auch möglich, komplexere Verfahren zur Mustererkennung oder auch KI-Programme zur Erkennung von abgebildeten Partikeln zu nutzen.

Aus dem Dokument EP 3 719 476 A1 ist ein System mit einer Rohrleitung bekannt, die eine Messeinrichtung zur Erfassung von Partikeln aufweist. Die Messeinrichtung ist mit einer Detektionseinheit versehen, die in einem Rohrinnenraum der Rohrleitung angeordnet ist. Die Detektionseinheit ist so konfiguriert, dass sie ein Auftreten verschiedener Partikel in dem Medium detektiert, klassifiziert und quantifiziert.

Die Publikation US 2004/0112748 A1 beschreibt ein System zur Bestimmung der dielektrophoretischen Reaktion von Teilchen durch Anlegen eines elektrischen Feldes mit verschiedenen Frequenzen an ein Medium in einer Kammer (das Medium enthält Teilchen, die in einer Flüssigkeit suspendiert sind).

Das Dokument US 2009/022388 A1 beschreibt ein Verfahren zur Verarbeitung und metrischen Quantifizierung von Bildern von Objekten, die Cluster von Partikeln enthalten, wie z.B. biologische Proben, die Cluster von Zellen umfassen. Es erfolgt eine Verarbeitung von Bildern von unregelmäßig geformten Objekten in Form von mindestens einer Ansammlung von punktförmigen oder fleckförmigen Objekten.

Die EP 3 719 476 A1 betrifft eine Messvorrichtung zur Erfassung von Partikeln in einer Rohrleitung mit wenigstens einer Erfassungseinheit, die in einem Rohrinnenraum der Rohrleitung angeordnet ist. Diese Einheit ist mit Sensoren und einer Auswerteelektronik ausgestattet, die es ermöglichen, verschiedene Partikelarten zu klassifizieren und deren Konzentration zu quantifizieren.

Ein Problem bei zahlreichen Flow-Imaging-Verfahren sowie auch anderen optischen Analyseverfahren wie z.B. cytometrischen Analyseverfahren besteht darin, dass es eine Grenzkonzentration gibt, oberhalb derer eine optische Trennung und Auswertung in verlässlicher Weise kaum möglich ist.

Der Erfindung liegt daher die Aufgabe zugrunde, die genannten Partikelanalyse-Systeme und -Verfahren dahingehend zu verbessern, dass eine zuverlässigere und präzisere Messung von Partikelkonzentrationen und der darüber hinausreichenden Parameter der Partikel, wie auch verschiedenster morphologischer Parameter (z.B. Circularität, Aspekt-Verhältnisse etc.), möglich wird.

Die Aufgabe wird gelöst durch eine Vorrichtung und ein Verfahren mit den Merkmalen der beiliegenden Patentansprüche.

Die erfindungsgemäße Vorrichtung zeichnet sich dadurch aus, dass die Auswerteeinrichtung dazu ausgebildet ist, aus den identifizierten ersten Bildbereichen, also solchen Bildbereichen welche von Partikeln in dem Fluid-Gemisch eingenommen werden, jeweils Einhüllende zu bestimmen, die solche erste Bildbereiche jeweils nach vorgegebenen Kriterien umschließen.

Nachdem also durch die herkömmlichen Methoden Partikelbereiche in den Bildern identifiziert wurden, werden diese Bildbereiche durch Einhüllende eingefasst. Diese Einhüllenden werden in der Bildebene generiert, also regelmäßig im zweidimensionalen Raum eines zweidimensionalen Bildes. Unter Einhüllende ist eine beliebige geschlossene Kurve oder geometrische Konstruktion zu verstehen, welche jeweils einen der ersten Bildbereiche nach vorgegebenen Kriterien einfasst oder begrenzend umschließt. Die Einhüllende kann beispielsweise aus einer Linie bestehen, die der Kantenerkennung des Übergangs zwischen Partikel und umgebenden partikelfreien Bereichen folgt. Eine solche Einhüllende kann auch nach vorgegebenen Kriterien ausgedehnt, also über den begrenzten Bildbereich, in dem ein Partikel erkannt wurde aufgebläht werden, um den betreffenden ersten Bereich mit einem gewissen Abstand zu umschließen. Dabei können auch einfache geometrische Formen gebildet werden, die den betreffenden ersten Bildbereich abdecken, insbesondere Kreise, Rechtecke, regelmäßige Vielecke oder sonstige Polygone oder Linienzüge.

Die Auswerteeinrichtung ist außerdem so ausgebildet, dass zu den ausgebildeten Einzelbildern jeweils eine Abdeckungs-Maßzahl bestimmt wird, welche aus den Flächen der Einhüllenden und der Fläche des gesamten erfassten Bildbereichs des Messzonen-Erfassungsabschnitts bestimmt wird.

Für jedes Bild wird also zu jedem ersten Bildbereich, der einen Partikel darstellt, jeweils eine Einhüllende bestimmt. Aus der Gesamtzahl der Einhüllenden für jedes dieser Bilder wird eine Fläche bestimmt und aus dieser Fläche und der Fläche des gesamten erfassten Bildbereichs des Messzonen-Erfassungsabschnitts wird die Abdeckungs-Maßzahl bestimmt.

Die Abdeckungs-Maßzahl ist ein Maß dafür, welcher Anteil des gesamten Bildbereiches von den Einhüllenden abgedeckt wird. Anhand dieser Abdeckungs-Maßzahl ist es möglich, die Verlässlichkeit einer optischen Partikelzählung und der darüber hinausreichenden Parameter der Partikel einzuschätzen, da bei steigender Abdeckung des Messbereiches vermehrt Überlappungen, Fehlerkennungen und mangelnde Partikeltrennungen zu erwarten sind. Nur wenn eine vorgegebene, maximal tolerable Abdeckung des gesamten Bildbereichs eingehalten wird, die Abdeckungs-Maßzahl also beispielsweise unterhalb eines vorgegebenen Schwellwertes liegt, ist eine verlässliche Trennung der Partikel durch die automatische Partikelerkennung und Zählung möglich.

Die generierte Abdeckungs-Maßzahl wird zur weiteren Verarbeitung an nachgeordnete Geräte als Steuersignal übermittelt und kann an einen Bediener zur Information über die vorliegenden Messverhältnisse gemeldet werden. Ein Bediener kann dann beispielsweise, sofern die Abdeckungs-Maßzahl eine zu starke Abdeckung des gesamten Bildbereichs des Messzonen-Erfassungsabschnitts anzeigt, eine zusätzliche Verdünnung einer zugeführten Probe vornehmen, um die Abdeckungs-Maßzahl durch Reduzierung der Partikelkonzentration zu verbessern.

Gemäß der Erfindung ist die Auswerteeinrichtung mit der Zuführungseinrichtung gekoppelt, wobei die Zuführungseinrichtung ein erstes Reservoir mit Fluid-Gemisch (also Fluid mit enthaltenden Partikeln) und ein zweiten Reservoir mit Verdünnungs-Fluid (also ein partikelfreies Fluid) aufweist. Das Verdünnungs-Fluid ist dabei dasselbe oder zumindest in seinen optischen Eigenschaften identisch oder hochgradig ähnlich zu dem Fluid im Fluid-Partikel-Gemisch. Die Auswerteeinrichtung steuert in dieser Ausführungsform die Zuführungseinrichtung derart an, dass in Abhängigkeit von der Abdeckungs-Maßzahl das Fluid-Gemisch mit Verdünnungs-Fluid verdünnt wird.

Es wird also eine automatisierte Nachverdünnung anhand der Abdeckungs-Maßzahl ermöglicht. Dies kann genutzt werden, um Partikelzählungen und weiterführende Partikelanalyse bei unterschiedlichen Abdeckungs-Maßzahlen durchzuführen, oder die Partikelzählung überhaupt erst in einem verlässlichen Bereich beginnen zu lassen. Gibt die Abdeckungs-Maßzahl an, dass eine präzise Erkennung der Partikelzahlung und der darüber hinausreichenden Parameter der Partikel in den durchgeführten Messungen unwahrscheinlich ist, führt eine zusätzliche Verdünnung zu einer Verringerung der Abdeckungs-Maßzahl und einer zuverlässigeren Trennung der optisch erfassten Partikel und deren Zählung.

Eine solche Vorrichtung kann gänzlich automatisiert eine optimierte Messung vornehmen, da genau in dem Bereich gemessen werden kann, für den die optimale Abdeckungs-Maßzahl zuvor festgestellt wurde. Eine solche Abdeckungs-Maßzahl kann in Abhängigkeit von den zu zählenden Partikeln, insbesondere deren Größe, Form und optischen Eigenschaften individuell und empirisch bestimmt werden. Gemäß dieser Ausführung kann ein Bediener die Messung mit einem hochkonzentrierten Fluid-Gemisch starten und die erfindungsgemäße Vorrichtung führt nach Erkennung einer solchen Überkonzentration anhand der Abdeckungs-Maßzahl eine automatisierte Nachverdünnung durch, bis die Abdeckungs-Maßzahl in einem Zielbereich liegt. Die Ansteuerung der Verdünnung kann eine einfache Regelung sein, wobei z.B. der Zuführungseinrichtung von der Auswerteeinrichtung ein erster Binärwert oder Signalwert zugeführt wird, welcher eine zusätzliche Verdünnung bewirkt und der Binärwert oder Signalwert geändert wird, sobald eine vorgegebene Abdeckungs-Maßzahl erreicht ist. Es kann auch eine komplexere Regelung erfolgen, wobei der Abstand zur angestrebten Abdeckungs-Maßzahl an die Zuführungseinrichtung signalisiert wird und diese die Stärke der Verdünnung in Abhängigkeit davon realisiert.

Es ist vorgesehen, dass sich an den Messzonen-Erfassungsabschnitt sowohl ein Messzonen-Einlauf als auch ein Messzonen-Auslauf anschließt, so dass der Messzonen-Erfassungsabschnitt zwischen Messzonen-Einlauf und Messzonen-Auslauf angeordnet ist. Die Förderung des Fluid-Gemisches erfolgt unter Verwendung einer Zuführungseinrichtung, welche stromauf der Messzone angeordnet ist und das Fluid-Gemisch vom Messzonen-Einlauf durch den Messzonen-Erfassungsabschnitt und zur Messzonen-Auslauf fördert (es ist grundsätzlich auch möglich, dass die Förderung durch eine erzeugte Sogwirkung stromab des Messzonen-Auslaufs oder durch Schwerkraft realisiert wird). In dieser Gestaltung wird das analysierte und anschließend bis zum Messzonen-Auslauf geförderte Fluid verworfen. Das frische, durch den Messzonen-Einlauf zum Messzonen-Erfassungsabschnitt geförderte Fluid wird in Abhängigkeit von der ermittelten Abdeckungs-Maßzahl verdünnt.

In einer bevorzugten Ausführungsform der Erfindung wird die Abdeckungs-Maßzahl durch die Auswerteeinrichtung gebildet, indem ein Quotient aus der Summe der Einhüllenden einerseits und der Fläche des gesamten Bildbereichs des Messzonen-Erfassungsabschnitts andererseits gebildet wird. Eine solch einfache und rasche Berechnung der Aufsummierung aller Flächeninhalte der gebildeten Einhüllenden ist im laufenden Betrieb und geringem Rechenaufwand möglich. Es kann ein Schwellwert vorgegeben werden, der eine maximal zulässige Belegung des gesamten Bildbereichs durch Partikel angibt, so dass eine Warnung generiert wird, wenn die Abdeckungs-Maßzahl über diesem Schwellwert liegt. Beispielsweise kann vorgesehen sein, dass der Quotient maximal 0,5 betragen darf, also maximal 50% der Fläche von den Einhüllenden bedeckt sein dürfen. Wird festgestellt, dass die aktuell ermittelte Abdeckungs-Maßzahl größer ist, wird eine Warnung ausgegeben, dass eine zusätzliche Verdünnung des Fluid-Gemisches erforderlich ist, um eine ordnungsgemäße Erfassung und Zählung der Partikel zu gewährleisten.

In einer Weiterbildung der Erfindung werden die geometrischen Einhüllenden derart bestimmt, dass jeweils ein Rechteck gebildet wird, welches einen jeweils zugeordneten ersten Bildbereich, also einen Bildbereich in dem ein Partikel erkannt wurde, mit einem vorgegebenen Mindestabstand umfasst.

Die Generierung von Rechtecken ist eine besonders einfache und rasche Methode, die Einhüllenden zu bestimmen. Wird in der Bildebene ein kartesisches Koordinatensystem aufgespannt, ist lediglich die maximale Erstreckung des ersten Bildbereiches in erster Richtung und dazu orthogonaler Richtung zu bestimmen. Zu einem Partikel wird also beispielsweise eine Oberkante, eine Unterkante, eine rechte Kante und eine linke Kante bestimmt, so dass aus diesen Kanten ein Rechteck gebildet werden kann. Bei nicht rechteckigen Partikeln wird die Einhüllende dabei grundsätzlich mehr Fläche einnehmen, als der Partikel der durch das Rechteck eingefasst wird, dies ist jedoch unproblematisch, da die Art der Bestimmung der Einhüllenden und die schließlich angelegten Kriterien einer zulässigen Abdeckungs-Maßzahl ohnehin empirisch aufeinander abzustimmen sind.

Es ist besonders bevorzugt, wenn die Zuführungseinrichtung ausgebildet ist, die Menge des zur Verdünnung zugefügten Verdünnungs-Fluids zu erfassen.

Die Dokumentation und Aufzeichnung der zugeführten Menge des Verdünnungs-Fluids erlaubt es nachträglich, auf die ursprüngliche Partikelkonzentration präzise zurückzurechnen. Bei der Erfassung der zugeführten Menge können herkömmliche Mittel zugesetzt werden, beispielsweise Durchflussmesser, Waagen aber auch sonstige Zähleinrichtungen (Schrittzahl einer Schrittmotorsteuerung), sofern beispielsweise Spritzenpumpen zum Einsatz kommen, deren Kolbenhub als Maß für die zugeführte Verdünnung herangezogen wird.

Es ist dabei besonders bevorzugt, wenn die Zuführungseinrichtung ebenfalls dazu ausgebildet ist, die Menge des bereits in die Messzone beförderten Fluid-Gemisches zu erfassen. Die Menge des bereits in die Messzone beförderten Fluids ist dann Maß dafür, welche Fluidmenge bereits aus dem ursprünglichen Probenvolumen abgezogen wurde und welche Menge des Fluids dort noch zur Verdünnung verbleibt. Dieser Fluidmengenwert kann dann genutzt werden, um die jeweils aktuelle Verdünnung zu ermitteln.

Grundsätzlich ist es auch möglich, das erfindungsgemäße Messprinzip in einem System mit zirkulierendem-Fluid-Gemisch oder auch mit einem stationären Reservoir an Fluid-Gemisch einzusetzen, welches grundsätzlich eine konstante Menge des ursprünglichen Fluid-Gemisches aufweist, jedoch zusätzlich nachverdünnt werden kann. In einem solchen Fall ist die Erfassung des in die Messhülle geförderten Fluid-Gemisches gegebenenfalls weniger relevant.

Analog zu der vorstehend genannten Vorrichtung ist das erfindungsgemäße Verfahren dadurch gekennzeichnet, dass mit Hilfe einer Auswerteeinrichtung zu den ersten Bildbereichen, welche als Partikel-Bildbereiche identifiziert wurden, jeweils geometrische Einhüllende bestimmt werden, welche diese in erste Bildbereiche jeweils nach vorgegebenen Kriterien umschließen. Aus den Flächen aller Einhüllenden zu einem Aufnahmebild und der Fläche des gesamten Bildbereichs des Messzonen-Erfassungsabschnitts wird anschließend die Abdeckungs-Maßzahl ermittelt.

Für die Möglichkeiten der Ermittlung der Abdeckungs-Maßzahlung und die Bestimmung der Einhüllenden gelten die vorstehenden Ausführungen zur Vorrichtung analog. Die Fläche der Einhüllenden wird mit vorgegebenen Rechenvorschriften mit der Fläche des gesamten Messbereiches ins Verhältnis gesetzt oder auf sonstige Weise verglichen, um ein Maß für die Partikel-Abdeckung des Bildbereiches zu erhalten.

In einer Weiterbildung der Erfindung wird das Fluid-Gemisch mit Hilfe der Zuführungseinrichtung mit partikelfreien Verdünnungs-Fluid kontinuierlich oder wiederholt verdünnt, wobei die Menge des zur Verdünnung zugeführten Verdünnungs-Fluids erfasst wird. Außerdem wird die Menge des in die Messzone geförderten Fluid-Gemisches erfasst. Die zueinander korrespondierenden (zeitlich einander zugeordneten) Mengen des zugeführten Verdünnungs-Fluids und Mengen des geförderten Fluid-Gemisches werden zusammen mit der ursprünglichen Menge des Fluid-Gemisches in der Zuführungseinrichtung zur Berechnung einer resultierenden Momentanverdünnung herangezogen. Dies Momentanverdünnung wird wiederum zu der aktuell und zeitgleich dazu ermittelten Abdeckungs-Maßzahl gespeichert und oder ausgegeben. Gemäß diesem Verfahren wird also in einer immer weiter verdünnten Menge des Fluid-Gemisches und zu jeder berechneten Momentanverdünnung eine Abdeckungs-Maßzahl ermittelt. Anschließend kann ein Bediener oder Benutzer diese Werte heranziehen, um aus seiner Sicht verlässliche Messwerte zu selektieren und weiter zu verarbeiten.

Es kann bei einer Weiterbildung der Erfindung auch vorgesehen sein, dass die optisch erfasste Partikelzahl für solche Bilderfassungen verworfen wird, bei denen die Abdeckungs-Maßzahl einen vorgegebenen Schwellwert übersteigt.

In dem vorgenannten Verfahren läuft dann eine Messung so ab, dass eine zunehmende Verdünnung des Fluid-Gemisches bewirkt wird, während die Flow-Imaging Erfassung läuft und wiederholt Abdeckungs-Maßzahlen ermittelt werden. Es werden dabei erst dann Messwerte zu der Partikelzahl ausgegeben, wenn die Abdeckungs-Maßzahl ein vorgegebenes Kriterium erfüllt (z.B. unter einen vorgegebenen Schwellwert sinkt) und anzeigt, dass eine ausreichende Trennung der Partikel in den aufgenommenen Bildern möglich ist. Grundsätzlich obliegt es dem Nutzer des Systems, eine für ihn passende Grenze und einen passenden Schwellwert der Abdeckungs-Maßzahl zu bestimmen. Es ist auch möglich, derartige Messungen mit verschiedenen Schwellwerten für Abdeckungs-Maßzahlen zu wiederholen, um zuvor erzielte Ergebnisse zu verifizieren.

In einer bevorzugten Ausgestaltung des genannten Verfahrens wird außerdem jederzeit, das heißt unter Heranziehung sowohl der jeweiligen Momentanverdünnung als auch der optisch erfassten Partikelzahl auf eine Partikelzahl des unverdünnten zugeführten Fluid-Gemisches zurückgerechnet, wobei die zugehörige Abdeckungs-Maßzahl als zusätzliches Bewertungskriterium ausgegeben oder gespeichert wird.

Die Erfindung wird nun anhand der beiliegenden Zeichnung näher erläutert.
Figur 1 ist eine schematische Darstellung einer erfindungsgemäßen Vorrichtung zur Durchführung des erfindungsgemäßen Verfahrens;
Figur 2a ist eine schematische Darstellung eines erfassten Bildbereiches mit einer ersten Abdeckungs-Maßzahl;
Figur 2b ist eine schematische Darstellung eines erfassten Bildbereiches mit einer zweiten Abdeckungs-Maßzahl;

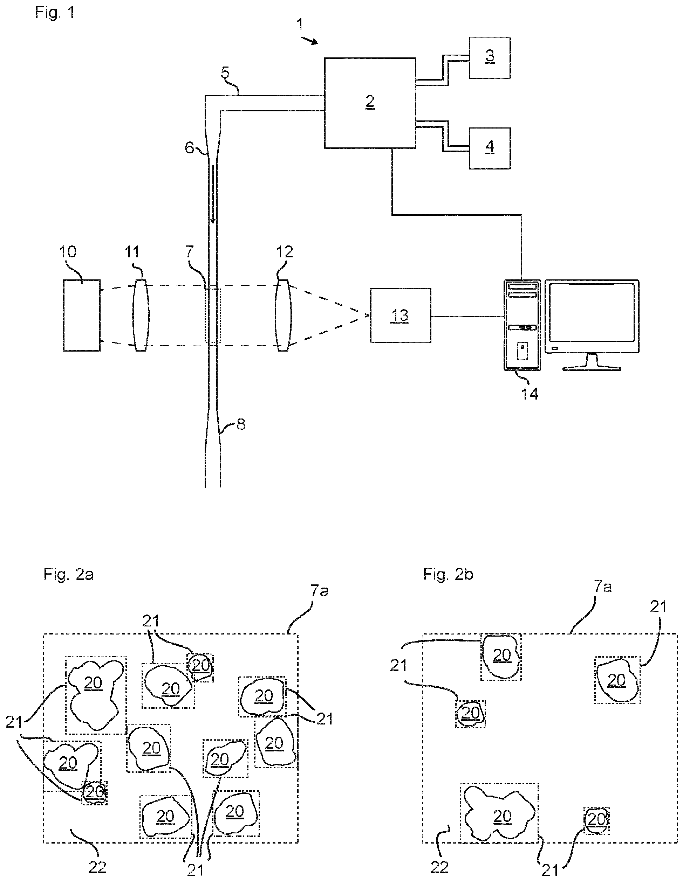

In Figur 1 ist eine erfindungsgemäße Vorrichtung zur Durchführung des erfindungsgemäßen Verfahrens gemäß einer ersten Ausführungsform dargestellt.

Die Vorrichtung weist eine Zuführungseinrichtung 1 auf. Die Zuführungseinrichtung 1 weist ihrerseits eine Misch- und Fördereinrichtung 2 auf, sowie ein Fluid-Gemisch-Reservoir 3 und ein Verdünnungs-Reservoir 4. Die Misch- und Fördereinrichtung 2 kann aus den Reservoirs 3 und 4 Fluid bzw. Fluid-Gemisch entnehmen, mischen und durch eine Zuleitung 5 in einen Messzonen-Einlauf 6 fördern. Der Messzonen-Einlauf 6 geht in einen Messzonen-Erfassungsabschnitt 7 über, der in einen Messzonen-Auslauf 8 mündet. Der Abschnitt zwischen Messzonen-Einlauf 6 über den Messzonen-Erfassungsabschnitt 7 und Messzonen-Auslauf 8 ist in dieser Darstellung verengt dargestellt, da in diesem Ausführungsbeispiel vorgesehen ist, dass eingeleitetes Fluid-Gemisch in einer optisch zugänglichen Weise an der Erfassungsoptik im Messzonen-Erfassungsabschnitt 7 vorbeizuführen. Dazu kann insbesondere vorgesehen sein, einen flachen, verbreiterten Fluidkanal vorzusehen, der senkrecht zu seiner flachen Erstreckung durchleuchtet und optisch erfasst wird. Neben dem Messzonen-Erfassungsabschnitt 7 ist eine Lichtquelle 10 angeordnet, die in diesem Ausführungsbeispiel durch eine LED gebildet wird. Das von der Lichtquelle 10 ausgestrahlte Licht wird durch eine Beleuchtungsoptik 11 zur Bestrahlung des Messzonen-Erfassungsabschnitts 7 aufbereitet und durchleuchtet die transparente Wandung der Fluidführung im Messzonen-Erfassungsabschnitt sowie das darin geführte Fluid-Gemisch. Ein Abbildungsoptik 12 fokussiert das Bild des Messzonen-Erfassungsabschnitts 7 auf eine Kamera 13. Die Kamera 13 ist in diesem Ausführungsbeispiel eine Kamera mit einem zweidimensionalen CCD-Bildsensor, wie sie aus dem Stand der Technik bekannt ist. Neben den hier vereinfacht dargestellten optischen Komponenten können durchaus weitere Komponenten, beispielsweise zusätzliche Beleuchtungsquellen, Shutter, Filter oder ähnliches eingesetzt werden können, die jedoch für das Verständnis dieser Erfindung nicht relevant sind und außerdem aus dem im Stand der Technik verfügbaren Systeme für Flow-Imaging bekannt sind.

Mit der Kamera 13 ist eine Auswerteeinrichtung 14 in Gestalt eines Computersystems gekoppelt. Die Auswerteeinrichtung 14 nimmt wiederholt, periodisch oder quasi-kontinuierlich die Daten aus der Kamera 13 auf und führt sie einer Bildauswertung zu. Dabei können grundsätzlich die Videoströme verarbeitet werden, die Kamera kann auch gepulst betrieben werden, ebenso wie die Beleuchtungseinrichtung 10. In der Auswerteeinrichtung 14 wird durch eine Bilderkennung eine Aufteilung der erfassten Bildbereiche des Messzonen-Erfassungsabschnitts 7 vorgenommen. Dabei werden solche Bereiche im Bild, die von Partikeln eingenommen werden identifiziert und von solchen Bereichen, die partikelfreies Fluid enthalten unterschieden. In der gezeigten Durchlichtkonstellation erscheinen die Partikelbereiche üblicherweise abgedunkelt gegenüber Bereichen, in denen sich ausschließlich Fluid befindet. Systeme zur optischen Erkennung von Partikeln und deren Zählung sind im Stand der Technik bekannt.

Erfindungsgemäß wird eine Auswertung durchgeführt, welche eine Abdeckungs-Maßzahl für jedes ausgewertete Bild ermittelt, oder zumindest für einen Teil der ausgewerteten Bilder. Die Abdeckungs-Maßzahl gibt dabei an, welcher Bildanteil insgesamt von Partikeln eingenommen wird. Dafür wird für jeden Partikel eine Einhüllende konstruiert, in diesem Beispiel ein einhüllendes Rechteck, welches die Bereiche im Bild umfasst, die von Partikeln eingenommen werden. In diesem Ausführungsbeispiel wird die Abdeckungs-Maßzahl errechnet, indem sämtliche Flächen der Einhüllenden, also sämtliche Rechteckflächen addiert werden und aus dieser Fläche ein Verhältnis mit der gesamten aufgenommenen Fläche 7a des Messzonen-Erfassungsbereichs 7 hergestellt wird. Liegt die Abdeckungs-Maßzahl oberhalb eines vorgegebenen Schwellwertes, steuert die Auswerteeinrichtung 14 die Zuführeinrichtung 1 an, um eine stärkere Verdünnung des Fluid-Gemisches zu bewirken. Die Zuführungseinrichtung erhöht dann den Strom des Verdünnungs-Fluids aus dem Verdünnungs-Reservoir 4, wobei sowohl die geförderte Verdünnungsfluidmenge als auch die geförderte Fluid-Gemisch Menge erfasst wird, um jederzeit auf die aktuelle Verdünnung und die Ursprungskonzentration zurückrechnen zu können. Dieser Vorgang wird solange durchgeführt, bis die Auswerteeinrichtung 14 feststellt, dass die Abdeckungs-Maßzahl unter den vorgegebenen Schwellwert abgesunken ist. Dabei kann die Auswerteeinrichtung 14 für die Ansteuerung der Zuführungsreinrichtung 1 durchaus gewisse Hysteresezeiten vorsehen, da die Förderung des stärker verdünnten Gemisches bis in den Messzonen-Erfassungsbereich eine gewisse Zeit in Anspruch nimmt, was durch die Hysteresezeiten berücksichtigt wird.

Die Abdeckungs-Maßzahl kann im vorliegenden Beispiel zum Beispiel so gewählt sein, dass maximal 20% der gesamten Fläche des Messzonen-Erfassungsbereichs (soweit durch die Kamera 13 in ein Bild gewandelt) durch Partikel abgedeckt wird bzw. durch deren Einhüllende. Die Auswerteeinrichtung 14 kann dabei außerdem zu jeder erfassten Partikelzahl die zugehörige Abdeckungs-Maßzahl speichern oder ausgeben, um deren Verlässlichkeit einschätzen zu können.

Figur 2a zeigt beispielhaft eine Abbildung, wie sie eine Kamera 13 von dem Messzonen-Erfassungsbereich 7 als Momentaufnahme liefert. Eine Vielzahl von Partikeln 20 werden in der Auswerteeinrichtung 14 als Partikel identifiziert und zu den Partikeln mit jeweils ein einhüllendes Rechteck 21 gebildet. Die partikelfreien Bereiche 22 sind bei einer einfachen Auswertung solche Bildbereiche, in welchen die Bildhelligkeit oberhalb eines vorgegebenen Detektionsschwellwerts liegt. Die Summe der Flächen der Rechtecke 21 wird berechnet und mit der erfassten Gesamtfläche 7a des Messzonen-Erfassungsabschnitts 7 ins Verhältnis gesetzt, in diesem Ausführungsbeispiel durch einfache Quotientenbildung. Wird festgestellt, dass dieser Quotient größer ist als ein vorgegebener Schwellwert, beispielsweise größer ist als 0.2, so steuert die Auswerteeinrichtung 14 die Zuführungseinrichtung 1 zur weiteren Verdünnung an. Es resultiert schließlich durch die stärkere Verdünnung ein Bild wie in Figur 2b gezeigt, bei dem der Quotient aus der Summe der Flächen von Einhüllenden 21 der Partikel 20, geteilt durch die Gesamtfläche 7a des Messzonen-Erfassungsbereiches 7 (soweit von der Kamera 13 erfasst) kleiner ist als 0.2. In diesem Zustand ist jederzeit gewährleistet, dass eine ausreichende Differenzierung der Partikel vorgenommen werden kann und die Zählung verlässlich ist. Der Zustand wird gemäß der Erfindung in diesem Ausführungsbeispiel gänzlich automatisiert erreicht, da die Ansteuerung der Auswerteeinrichtung in Abhängigkeit von der Abdeckungs-Maßzahl so erfolgt, dass die Verdünnung durch die Zuführungseinrichtung 1 erhöht wird, wenn die Abdeckungsmaßzahl oberhalb des vorgegebenen Schwellwertes ist.

## Patentansprüche

1. Vorrichtung zur Partikelanalyse an Fluid-Gemischen, wobei die Fluid-Gemische wenigstens ein Trägerfluid und darin mitgeführte Partikel aufweisen, wobei sich das Trägerfluid und die Partikel in ihren optischen Eigenschaften unterscheiden,
mit einem Messzonen-Erfassungsabschnitt (7), welcher einen Aufnahmeraum für das Fluid-Gemisch bildet,
mit einer optischen Erfassungseinrichtung (10, 11, 12, 13), welche eine Beleuchtungseinrichtung (10, 11) und eine digitale Kamera (13) mit einem opto-elektrischen Erfassungsarray aufweist, wobei die Beleuchtungseinrichtung (10, 11) zur Beleuchtung des Messzonen-Erfassungsabschnitts (7) angeordnet ist und wobei die digitale Kamera (13) zur Aufnahme des Fluid-Gemisches im Messzonen-Erfassungsabschnitt (7) ausgebildet ist,
wobei die digitale Kamera (13) mit einer Auswerteeinrichtung (14) gekoppelt ist und Bildsignale an die Auswerteeinrichtung (14) ausgibt,
wobei die Auswerteeinrichtung (14) wiederholt aus den Bildsignalen entnommene Einzelbilder auswertet, um erste Bildbereiche, in welcher Partikel (20) abgebildet sind von zweiten Bildbereichen (22), in welchen partikelfreies Fluid abgebildet ist, abzugrenzen, wobei die Auswerteeinrichtung ausgebildet ist, zu den ersten Bildbereichen jeweils Einhüllende (21) zu bestimmen, welche die ersten Bildbereiche jeweils nach vorgegebenen Kriterien umschließen,
wobei die Auswerteeinrichtung ausgebildet ist, zu den ausgewerteten Einzelbildern eine Abdeckungs-Maßzahl zu bestimmen, welche aus den gesamten Flächen der Einhüllenden (21) und der Fläche (7a) des gesamten erfassten Bildbereichs des Messzonen-Erfassungsabschnitts (7) bestimmt wird,
wobei eine Messzone (6, 7, 8) gebildet ist, die einen Messzonen-Einlauf (6) und einen Messzonen-Auslauf (8) aufweist, die jeweils als Fluidführungen ausgebildet sind und in Fluidkommunikation mit dem dazwischen angeordneten Messzonen-Erfassungsabschnitt (7) stehen,
mit einer Zuführungseinrichtung (1), welche stromauf der Messzone (6, 7, 8) angeordnet ist und durch eine Zuleitung (5) ein Fluid-Gemisch in den Messzonen-Einlauf (6), durch den Messzonen-Erfassungsabschnitt (7) und zum Messzonen-Auslauf (8) fördert,
wobei die Auswerteeinrichtung (14) mit der Zuführungseinrichtung (1) gekoppelt ist, wobei die Zuführungseinrichtung eine an die Zuleitung (5) angeschlossene Misch- und Fördereinrichtung (2) sowie ein erstes Reservoir (3) mit Fluid-Gemisch und ein zweites Reservoir (4) mit Verdünnungs-Fluid aufweist, wobei das erste Reservoir (3) und das zweite Reservoir (4) an die Misch- und Fördereinrichtung (2) angeschlossen sind und wobei die Zuführungseinrichtung (1) ausgebildet ist, in Abhängigkeit von der Abdeckungs-Maßzahl das Fluid-Gemisch mit Verdünnungs-Fluid zu verdünnen.

2. Vorrichtung nach Patentanspruch 1, wobei die Auswerteeinrichtung (14) dazu ausgebildet ist, die Abdeckungs-Maßzahl zu bilden, indem sie einen Quotient aus Summe der Flächen der Einhüllenden (21) und Fläche des gesamten Bildbereichs (7a) des Messzonen-Erfassungsabschnitts bildet.

3. Vorrichtung nach einem der vorangehenden Patentansprüche, wobei die Auswerteeinrichtung (14) dazu ausgebildet ist, die Einhüllenden (21) zu bestimmen, indem sie jeweils ein gleichseitiges Vieleck, insbesondere ein Rechteck bestimmt, welches einen jeweils zugeordneten ersten Bildbereich mit einem vorgegebenen Mindestabstand umfasst.

4. Vorrichtung nach Patentanspruch 3, wobei die Zuführungseinrichtung ausgebildet ist, die Menge des zur Verdünnung zugeführten Verdünnungs-Fluids zu erfassen.

5. Vorrichtung nach einem der Patentansprüche 3 oder 4, wobei die Zuführungseinrichtung ausgebildet ist, die Menge des in die Messzone geförderten Fluid-Gemisches zu erfassen.

6. Verfahren zur Analyse von Partikeln in Fluid-Gemischen, mit einer Vorrichtung gemäß einem der vorstehenden Patentansprüche.

7. Verfahren nach Patentanspruch 6, wobei die Abdeckungs-Maßzahl gebildet wird, indem ein Quotient aus Summe der Flächen der Einhüllenden (21) und Fläche des gesamten Bildbereichs (7a) des Messzonen-Erfassungsabschnitts gebildet wird.

8. Verfahren nach einem der Patentansprüche 6 bis 7, wobei die geometrischen Einhüllenden (21) bestimmt werden, indem jeweils ein gleichseitiges Vieleck, insbesondere ein Rechteck konstruiert wird, welches einen jeweils zugeordneten ersten Bildbereich mit einem vorgegebenen Mindestabstand umfasst.

9. Verfahren nach Patentanspruch 6, wobei die Menge des zur Verdünnung zugeführten Verdünnungs-Fluids erfasst wird.

10. Verfahren nach einem der Patentansprüche 6 bis 9, wobei die Menge des in den Messzonen-Erfassungsabschnitts geförderten Fluid-Gemisches erfasst wird.

11. Verfahren nach einem der Patentansprüche 6 bis 8, wobei das Fluid-Gemisch mit Hilfe einer Zuführungseinrichtung vor der Förderung in den Messzonen-Erfassungsabschnitt mit partikelfreiem Verdünnungs-Fluid kontinuierlich oder wiederholt verdünnt wird,
wobei die Menge des zur Verdünnung zugeführten Verdünnungs-Fluids erfasst wird,
wobei die Menge des in den Messzonen-Erfassungsabschnitt geförderten Fluid-Gemisches erfasst wird,
wobei die korrespondierenden Mengen des zugeführten Verdünnungs-Fluids und der Menge des geförderten Fluid-Gemisches zusammen mit der ursprünglichen Menge des Fluid-Gemisches in der Zuführungseinrichtung zur Berechnung einer resultierenden Momentanverdünnung zu jeder Abdeckungs-Maßzahl verwendet werden.

12. Verfahren nach Patentanspruch 11, wobei die optisch erfasste Partikelzahl für solche Bilderfassungen verworfen wird, bei denen die Abdeckungs-Maßzahl einen vorgegebenen Schwellwert übersteigt.

13. Verfahren nach einem der Patentansprüche 11 oder 12, wobei aus der jeweiligen Momentanverdünnung und der optisch erfassten Partikelzahl auf eine Partikelzahl des unverdünnten zugeführten Fluid-Gemisches zurückgerechnet wird.

## Claims

1. Device for particle analysis of fluid mixtures, wherein the fluid mixtures comprise at least one carrier fluid and particles carried therein, wherein the carrier fluid and the particles differ in their optical properties,
comprising a measurement zone detection section (7) which forms a receiving space for the fluid mixture,
comprising an optical detection device (10, 11, 12, 13) which comprises an illumination device (10, 11) and a digital camera (13) with an opto-electric detection array, wherein the illumination device (10, 11) is arranged for illuminating the measurement zone detection section (7) and wherein the digital camera (13) is configured for recording the fluid mixture in the measurement zone detection section (7),
wherein the digital camera (13) is coupled to an evaluation device (14) and outputs image signals to the evaluation device (14),
wherein the evaluation device (14) repeatedly evaluates individual images extracted from the image signals in order to delimit first image regions in which particles (20) are depicted from second image regions (22) in which particle-free fluid is depicted, wherein the evaluation device is configured to determine envelopes (21) for the first image regions, which envelopes respectively enclose the first image regions according to predetermined criteria,
wherein the evaluation device is configured to determine a coverage measure for the evaluated individual images, which coverage measure is determined from the total areas of the envelopes (21) and the area (7a) of the entire captured image region of the measurement zone detection section (7),
wherein a measurement zone (6, 7, 8) is formed which comprises a measurement zone inlet (6) and a measurement zone outlet (8), each of which is configured as fluid conduits and which are in fluid communication with the measurement zone detection section (7) arranged therebetween,
comprising a supply device (1) which is arranged upstream of the measurement zone (6, 7, 8) and conveys a fluid mixture through a supply line (5) into the measurement zone inlet (6), through the measurement zone detection section (7) and to the measurement zone outlet (8),
wherein the evaluation device (14) is coupled to the supply device (1), wherein the supply device comprises a mixing and conveying device (2) connected to the supply line (5) as well as a first reservoir (3) with fluid mixture and a second reservoir (4) with dilution fluid, wherein the first reservoir (3) and the second reservoir (4) are connected to the mixing and conveying device (2) and wherein the supply device (1) is configured to dilute the fluid mixture with dilution fluid depending on the coverage measure.

2. Device according to claim 1, wherein the evaluation device (14) is configured to form the coverage measure by forming a quotient from the sum of the areas of the envelopes (21) and the area of the entire image region (7a) of the measurement zone detection section.

3. Device according to one of the preceding claims, wherein the evaluation device (14) is configured to determine the envelopes (21) by determining in each case a regular polygon, in particular a rectangle, which encompasses a respectively assigned first image region with a predetermined minimum distance.

4. Device according to claim 3, wherein the supply device is configured to detect the amount of dilution fluid supplied for dilution.

5. Device according to one of claims 3 or 4, wherein the supply device is configured to detect the amount of fluid mixture conveyed into the measurement zone.

6. Method for analysing particles in fluid mixtures, with a device according to one of the preceding claims.

7. Method according to claim 6, wherein the coverage measure is formed by forming a quotient from the sum of the areas of the envelopes (21) and the area of the entire image region (7a) of the measurement zone detection section.

8. Method according to one of claims 6 to 7, wherein the geometric envelopes (21) are determined by constructing in each case a regular polygon, in particular a rectangle, which encompasses a respectively assigned first image region with a predetermined minimum distance.

9. Method according to claim 6, wherein the amount of dilution fluid supplied for dilution is detected.

10. Method according to one of claims 6 to 9, wherein the amount of fluid mixture conveyed into the measurement zone detection section is detected.

11. Method according to one of claims 6 to 8, wherein the fluid mixture is continuously or repeatedly diluted with particle-free dilution fluid by means of a supply device before being conveyed into the measurement zone detection section,
wherein the amount of dilution fluid supplied for dilution is detected,
wherein the amount of fluid mixture conveyed into the measurement zone detection section is detected,
wherein the corresponding amounts of the supplied dilution fluid and the amount of the conveyed fluid mixture together with the original amount of the fluid mixture in the supply device are used for calculating a resulting instantaneous dilution for each coverage measure.

12. Method according to claim 11, wherein the optically detected particle count is discarded for those image acquisitions for which the coverage measure exceeds a predetermined threshold value.

13. Method according to one of claims 11 or 12, wherein a particle count of the undiluted supplied fluid mixture is calculated back from the respective instantaneous dilution and the optically detected particle count.

## Revendications

1. Dispositif d'analyse de particules dans des mélanges fluides, dans lequel les mélanges fluides comprennent au moins un fluide porteur et des particules transportées dans celui-ci, dans lequel le fluide porteur et les particules diffèrent dans leurs propriétés optiques,
comportant une section de détection de zone de mesure (7) qui forme un espace de réception pour le mélange fluide, comportant un dispositif de détection optique (10, 11, 12, 13) qui comprend un dispositif d'éclairage (10, 11) et une caméra numérique (13) avec un réseau de détection opto-électrique, dans lequel le dispositif d'éclairage (10, 11) est agencé pour éclairer la section de détection de zone de mesure (7) et dans lequel la caméra numérique (13) est configurée pour enregistrer le mélange fluide dans la section de détection de zone de mesure (7), dans lequel la caméra numérique (13) est couplée à un dispositif d'évaluation (14) et délivre des signaux d'image au dispositif d'évaluation (14), dans lequel le dispositif d'évaluation (14) évalue de manière répétée des images individuelles extraites des signaux d'image afin de délimiter des premières régions d'image dans lesquelles des particules (20) sont représentées de deuxièmes régions d'image (22) dans lesquelles du fluide exempt de particules est représenté, dans lequel le dispositif d'évaluation est configuré pour déterminer des enveloppes (21) pour les premières régions d'image, lesquelles enveloppes entourent respectivement les premières régions d'image selon des critères prédéterminés, dans lequel le dispositif d'évaluation est configuré pour déterminer une grandeur de mesure de recouvrement pour les images individuelles évaluées, laquelle grandeur de mesure de recouvrement est déterminée à partir des surfaces totales des enveloppes (21) et de la surface (7a) de la région d'image capturée totale de la section de détection de zone de mesure (7), dans lequel une zone de mesure (6, 7, 8) est formée, qui comprend une entrée de zone de mesure (6) et une sortie de zone de mesure (8), qui sont chacune configurées comme des conduites de fluide et qui sont en communication fluidique avec la section de détection de zone de mesure (7) agencée entre elles, comportant un dispositif d'alimentation (1) qui est agencé en amont de la zone de mesure (6, 7, 8) et transporte un mélange fluide par une conduite d'amenée (5) dans l'entrée de zone de mesure (6), à travers la section de détection de zone de mesure (7) et vers la sortie de zone de mesure (8), dans lequel le dispositif d'évaluation (14) est couplé au dispositif d'alimentation (1), dans lequel le dispositif d'alimentation comprend un dispositif de mélange et de transport (2) raccordé à la conduite d'amenée (5) ainsi qu'un premier réservoir (3) avec mélange fluide et un deuxième réservoir (4) avec fluide de dilution, dans lequel le premier réservoir (3) et le deuxième réservoir (4) sont raccordés au dispositif de mélange et de transport (2) et dans lequel le dispositif d'alimentation (1) est configuré pour diluer le mélange fluide avec du fluide de dilution en fonction de la grandeur de mesure de recouvrement.

2. Dispositif selon la revendication 1, dans lequel le dispositif d'évaluation (14) est configuré pour former la grandeur de mesure de recouvrement en formant un quotient à partir de la somme des surfaces des enveloppes (21) et de la surface de la région d'image totale (7a) de la section de détection de zone de mesure.

3. Dispositif selon l'une des revendications précédentes, dans lequel le dispositif d'évaluation (14) est configuré pour déterminer les enveloppes (21) en déterminant à chaque fois un polygone régulier, en particulier un rectangle, qui englobe une première région d'image respectivement associée avec une distance minimale prédéterminée.

4. Dispositif selon la revendication 3, dans lequel le dispositif d'alimentation est configuré pour détecter la quantité de fluide de dilution amenée pour la dilution.

5. Dispositif selon l'une des revendications 3 ou 4, dans lequel le dispositif d'alimentation est configuré pour détecter la quantité de mélange fluide transportée dans la zone de mesure.

6. Procédé d'analyse de particules dans des mélanges fluides, avec un dispositif selon l'une des revendications précédentes.

7. Procédé selon la revendication 6, dans lequel la grandeur de mesure de recouvrement est formée en formant un quotient à partir de la somme des surfaces des enveloppes (21) et de la surface de la région d'image totale (7a) de la section de détection de zone de mesure.

8. Procédé selon l'une des revendications 6 à 7, dans lequel les enveloppes géométriques (21) sont déterminées en construisant à chaque fois un polygone régulier, en particulier un rectangle, qui englobe une première région d'image respectivement associée avec une distance minimale prédéterminée.

9. Procédé selon la revendication 6, dans lequel la quantité de fluide de dilution amenée pour la dilution est détectée.

10. Procédé selon l'une des revendications 6 à 9, dans lequel la quantité de mélange fluide transportée dans la section de détection de zone de mesure est détectée.

11. Procédé selon l'une des revendications 6 à 8, dans lequel le mélange fluide est dilué de manière continue ou répétée avec du fluide de dilution exempt de particules au moyen d'un dispositif d'alimentation avant le transport dans la section de détection de zone de mesure,
dans lequel la quantité de fluide de dilution amenée pour la dilution est détectée, dans lequel la quantité de mélange fluide transportée dans la section de détection de zone de mesure est détectée, dans lequel les quantités correspondantes du fluide de dilution amené et la quantité du mélange fluide transporté conjointement avec la quantité originale du mélange fluide dans le dispositif d'alimentation sont utilisées pour calculer une dilution instantanée résultante pour chaque grandeur de mesure de recouvrement.

12. Procédé selon la revendication 11, dans lequel le nombre de particules détectées optiquement est rejeté pour les acquisitions d'images pour lesquelles la grandeur de mesure de recouvrement dépasse une valeur seuil prédéterminée.

13. Procédé selon l'une des revendications 11 ou 12, dans lequel un nombre de particules du mélange fluide amené non dilué est recalculé à partir de la dilution instantanée respective et du nombre de particules détectées optiquement.
